# DEMANDE DE BREVET EUROPEEN

(11) **EP 4 838 386 A1**
(43) Date de publication de la demande: **11.11.2026**
(21) Numéro de dépôt: 26162471.2
(22) Date de dépôt: 05.03.2026
(51) Int. Cl.: G06F 17/14

(54) **PROCÉDÉ ET DISPOSITIF D'IDENTIFICATION DE FORME D'ONDE**

(30) Priorité: 05.03.2025 FR 2502217
(71) Demandeur: THALES, 92190 Meudon (FR)
(72) Inventeur: SECHEHAYE, Maxime, 78852 ELANCOURT CEDEX (FR); RUBAT-CIAGNUS, Elise, 78852 ELANCOURT CEDEX (FR); BOURMAUD, Alexia, 78852 ELANCOURT CEDEX (FR)
(74) Mandataire: Lavoix

(57) **Abrégé**

Ce procédé effectue une identification de forme d'onde à partir d'un signal numérisé représenté sous forme d'un vecteur initial de T échantillons représentatifs des ondes électromagnétiques reçues. Le procédé comporte des étapes de:
- application (40) d'un réseau de diffusion par ondelettes au vecteur initial, et obtention en sortie d'un nombre P de vecteurs intermédiaires (Vi_1,...,Vi_P),
- calcul (44) d'un vecteur de statistiques par vecteur intermédiaire, chaque vecteur de statistiques comprenant des valeurs de paramètres statistiques prédéterminés calculées pour ledit vecteur intermédiaire,
- formation (46) d'un vecteur de description (V_{D}) du vecteur initial à partir desdits vecteurs de statistiques,
- application (46) d'un modèle de classification prenant en entrée le vecteur de description, le modèle de classification étant préalablement entraîné par apprentissage machine, pour fournir une prédiction d'appartenance à une classe de forme d'onde parmi un ensemble de N classes de formes d'onde prédéterminé.

## Description

La présente invention concerne un procédé d'identification de forme d'onde à partir d'un signal numérisé.

L'invention concerne également un dispositif d'identification de forme d'onde à partir d'un signal numérisé et un programme d'ordinateur associé.

L'invention se situe dans le domaine de l'intelligence électronique, et trouve des applications dans les récepteurs d'ondes électromagnétiques munis de fonctionnalités d'analyse avancées.

En effet, dans le domaine de l'intelligence électronique, il est critique d'être en mesure d'analyser des signaux reçus par des récepteurs d'ondes électromagnétiques, pour les caractériser et en extraire des informations relatives à l'émetteur, pour des applications civiles ou militaires.

Par exemple, dans un scénario d'émission d'ondes électromagnétiques par un émetteur d'ondes électromagnétiques en direction d'une cible, par exemple une plateforme mobile, il est utile d'équiper la cible d'un récepteur ayant des capacités d'analyse des ondes électromagnétiques reçues, pour en déduire des informations sur l'émetteur, par exemple le type d'émetteur ou un type d'informations que l'émetteur cherche à acquérir, par exemple des informations de vitesse ou de position de la cible.

Un récepteur d'ondes électromagnétiques comporte classiquement une antenne de réception d'ondes électromagnétiques, un module de numérisation permettant d'obtenir des signaux numérisés à partir des ondes électromagnétiques reçues, et un module de désentrelacement permettant de séparer les signaux reçus en fonction des émetteurs. Les signaux numérisés désentrelacés sont analysés, caractérisés et labélisés. La labélisation de tels signaux est connue sous le nom d'identification de forme d'onde. Les formes d'ondes peuvent constituer des signatures d'émetteurs de type connu, donc les formes d'ondes peuvent être classées dans des catégories associées à des types d'émetteur.

Les formes d'onde à identifier et classer sont impulsionnelles et comportent des caractéristiques non stationnaires, de nombreux paramètres pouvant varier dans le temps comme la fréquence instantanée ou la période de répétition des impulsions.

L'identification de formes d'onde est une tâche complexe, car la durée d'enregistrement des signaux ne correspond pas nécessairement à la durée d'une forme d'onde, en particulier à une période de répétition d'un motif d'impulsions, et l'enregistrement des signaux ne correspond pas nécessairement à un début de période de répétition d'un motif d'impulsions. Ainsi, il est important d'être en mesure d'identifier une forme d'onde à partir d'un enregistrement partiel de celle-ci, ou d'identifier des formes d'onde identiques à partir d'enregistrements effectué à des instants différents.

De manière connue, la transformée de Fourier à court terme, connue sous l'acronyme de STFT (pour « Short Time Fourier Transform ») est utilisée pour réaliser une analyse temps-fréquence des signaux reçus. Les méthodes connues utilisent en général des caractéristiques de PDW (pour « Pulse Descriptor Word»), le plus souvent extraites des représentations STFT des signaux reçus. Ces méthodes sont particulièrement sensibles au rapport signal à bruit, et donc sont peu performantes sur des signaux bruités.

Il existe également des méthodes utilisant des cartes temps-fréquence représentatives du signal reçu et numérisé, utilisées en entrée d'un réseau de neurones convolutif pour une classification dans une classe parmi une pluralité de classes connues. Mais ces méthodes sont gourmandes en ressources calculatoires, et sont limitées au traitement de signaux numérisés générés sur une bande de quelques MHz, ce qui peut s'avérer insuffisant pour diverses applications.

L'invention a pour objet de remédier aux inconvénients de l'état de la technique précités, en proposant un procédé d'identification de formes d'onde à partir de signaux numérisés bruts à large bande, en introduisant une compression qui préserve suffisamment de caractéristiques permettant une bonne identification.

A cet effet, l'invention a pour objet un procédé d'identification de forme d'onde à partir d'un signal numérisé obtenu par réception d'ondes électromagnétiques par une antenne de réception, numérisation et désentrelacement, le signal numérisé étant représenté sous forme d'un vecteur initial de T échantillons représentatifs des ondes électromagnétiques reçues. Ce procédé est mis en œuvre par un processeur de calcul et comporte des étapes de:
- application d'un réseau de diffusion par ondelettes au vecteur initial, et obtention en sortie d'un nombre P de vecteurs intermédiaires,
- calcul d'un vecteur de statistiques par vecteur intermédiaire, chaque vecteur de statistiques comprenant des valeurs de paramètres statistiques prédéterminés calculées pour ledit vecteur intermédiaire,
- formation d'un vecteur de description du vecteur initial à partir desdits vecteurs de statistiques,
- application d'un modèle de classification prenant en entrée le vecteur de description, le modèle de classification étant préalablement entraîné par apprentissage machine, pour fournir une prédiction d'appartenance à une classe de forme d'onde parmi un ensemble de N classes de formes d'onde prédéterminé.

Avantageusement, l'application d'un réseau de diffusion par ondelettes permet d'obtenir une représentation préservant les caractéristiques du signal numérisé à plusieurs échelles, quasi invariante en translation, et le calcul d'un vecteur de statistiques permet d'effectuer une compression des données, ce qui permet finalement l'application d'un modèle de classification préalablement entraîné par apprentissage machine. Le procédé d'identification de forme d'onde proposé est robuste et permet d'obtenir une classification fiable.

Suivant d'autres aspects avantageux de l'invention, le procédé d'identification de forme d'onde comprend une ou plusieurs des caractéristiques suivantes, prises isolément ou suivant toutes les combinaisons techniquement possibles.

L'étape de formation comporte une concaténation desdits vecteurs de statistiques, ledit vecteur de description résultant de ladite concaténation.

L'étape de formation comporte une concaténation desdits vecteurs de statistiques pour obtenir un vecteur concaténé, ladite concaténation étant suivie d'une étape de réduction de taille du vecteur concaténé pour obtenir ledit vecteur de description.

La réduction de taille met en œuvre une analyse discriminante linéaire, préalablement entraînée pour une discrimination entre les N classes de formes d'onde dudit ensemble de formes d'onde, le vecteur de description obtenu en sortie étant de taille N-1.

Le modèle de classification est un modèle de classification à arbres de décision, préalablement entraîné par apprentissage supervisé.

Le procédé comporte en outre une étape d'identification de la forme d'onde en fonction de la classe prédite, comportant une extraction d'informations associées à la classe de forme d'onde prédite à partir d'une base de données, et un affichage de la classe de forme d'onde prédite et desdites informations associées sur une interface graphique ou une transmission desdites informations à un système informatique externe.

Les paramètres statistiques calculés comprennent, pour chaque vecteur intermédiaire, un ou plusieurs des paramètres suivants : le minimum, le maximum, la moyenne, l'écart-type.

Selon un autre aspect, l'invention concerne également un dispositif d'identification de forme d'onde à partir d'un signal numérisé, ledit signal numérisé étant obtenu après réception d'ondes électromagnétiques par une antenne de réception, numérisation et désentrelacement, le signal numérisé étant représenté sous forme d'un vecteur initial de T échantillons représentatifs d'ondes électromagnétiques reçues. Ce dispositif comporte un processeur de calcul configuré pour mettre en œuvre :
- un module d'application d'un réseau de diffusion par ondelettes au vecteur initial, et d'obtention en sortie d'un nombre P de vecteurs intermédiaires,
- un module de calcul d'un vecteur de statistiques par vecteur intermédiaire, chaque vecteur de statistiques comprenant des valeurs de paramètres statistiques prédéterminés calculées pour ledit vecteur intermédiaire,
- un module de formation d'un vecteur de description du vecteur initial à partir desdits vecteurs de statistiques,
- un module de classification par application d'un modèle de classification prenant en entrée le vecteur de description, le modèle de classification étant préalablement entraîné par apprentissage machine, pour fournir une prédiction d'appartenance à une classe de forme d'onde parmi un ensemble de N classes de formes d'onde prédéterminé.

L'invention concerne également un programme d'ordinateur comportant des instructions logicielles qui, lorsqu'elles sont exécutées par un ordinateur, mettent en œuvre un procédé d'identification de forme d'onde tel que défini ci-dessus.

Selon un autre aspect, l'invention concerne un récepteur d'ondes électromagnétiques comportant un dispositif d'identification de forme d'onde tel que brièvement décrit ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 représente schématiquement un système comportant un émetteur et un récepteur d'ondes électromagnétiques dans lequel l'invention s'applique ;
[Fig. 2] la figure 2 est un synoptique des blocs fonctionnels d'un dispositif d'identification de forme d'onde selon un mode de réalisation ;
[Fig. 3] la figure 3 est un logigramme des principales étapes d'un procédé d'identification de forme d'onde selon un mode de réalisation ;
[Fig. 4] la figure 4 illustre schématiquement un réseau de diffusion par ondelettes.

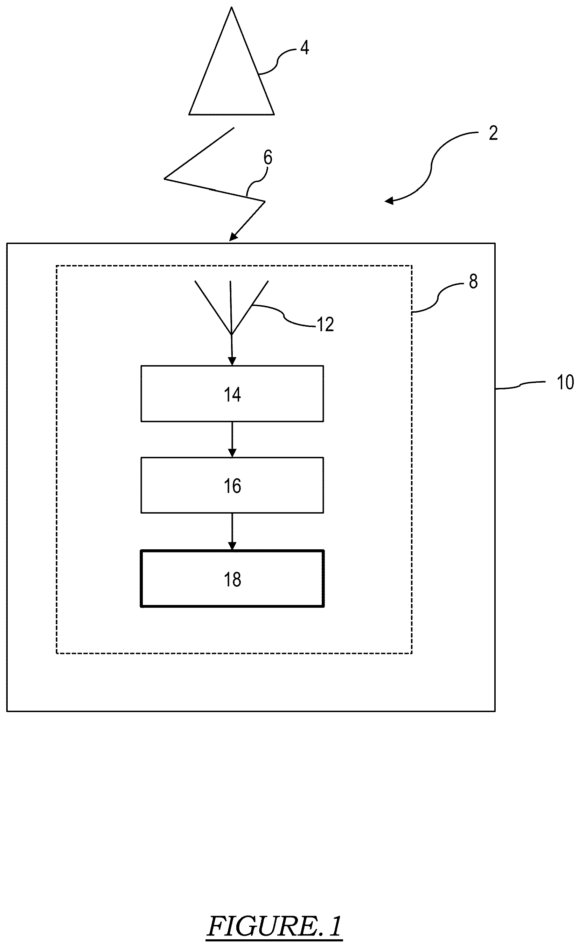

La figure 1 illustre schématiquement un exemple de système 2 dans lequel l'invention trouve une application.

Un émetteur d'ondes électromagnétiques 4 émet des ondes électromagnétiques 6, qui sont captées par un récepteur d'ondes électromagnétiques 8, embarqué sur porteur 10, le porteur 10 étant par exemple une plateforme mobile.

Dans un scénario d'utilisation typique, l'émetteur d'ondes électromagnétiques 4 et le récepteur d'ondes électromagnétiques 8 appartiennent à des opérateurs différents, potentiellement adversaires.

Un seul émetteur d'ondes électromagnétiques 4 est illustré, mais en pratique, plusieurs émetteurs d'ondes électromagnétiques 4 peuvent être présents et émettre en même temps.

Dans un exemple applicatif, la plateforme mobile 10 est un aéronef, avec ou sans pilote à bord, ou tout autre type de véhicule.

L'émetteur d'ondes électromagnétiques 4 peut également être embarqué sur une plateforme mobile non représentée.

En variante, l'émetteur d'ondes électromagnétiques 4 ou le récepteur d'ondes électromagnétiques 8 est disposé sur un bâti fixe.

Le récepteur d'ondes électromagnétiques 8 comporte une antenne 12 apte à recevoir des ondes électromagnétiques, un module de réception 14 comportant une ou plusieurs voies de réception, un module de désentrelacement 16 et un dispositif d'identification de forme d'onde 18. Le module de réception 14 effectue une conversion analogique/numérique, le module 16 et le dispositif 18 traitent des signaux numérisés, représentés sous forme de séries d'échantillons représentatifs des ondes électromagnétiques captées par l'antenne 12.

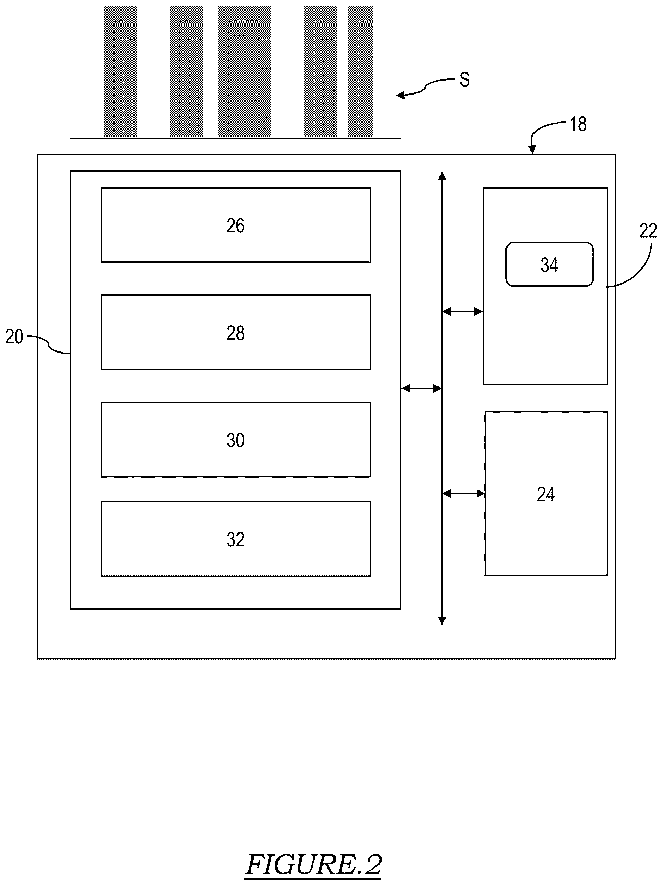

Le dispositif d'identification de forme d'onde 18, configuré pour mettre en œuvre un procédé d'identification de forme d'onde, est décrit plus en détail en référence à la figure 2.

A l'issue du traitement par le module de désentrelacement 16 est obtenu un signal numérisé S, représenté sous forme d'un vecteur initial de T échantillons de signal, T étant un nombre entier. Le nombre T est par exemple de l'ordre de 10 000 000 pour une durée de 10ms pour un échantillonnage à 1GHz.

Le signal numérisé S est un signal impulsionnel, constitué d'une pluralité d'impulsions successives dans le temps, caractérisées par des largeurs d'impulsion respectives, chaque impulsion ayant des instants temporels de début et de fin associés.

Le dispositif d'identification de forme d'onde 18 est un dispositif électronique programmable, comportant un processeur de calcul 20, une unité de mémoire électronique 22, une interface d'entrée/sortie 24, des éléments étant aptes à communiquer via un bus de communication interne.

L'interface d'entrée/sortie 24 comporte par exemple une interface homme-machine, et/ou une interface de communication avec un système informatique externe (non représenté).

Le dispositif d'identification de forme d'onde 18 comporte un module 26 d'application d'un réseau de diffusion par ondelettes au vecteur initial pour obtenir une pluralité de vecteurs intermédiaires.

Le dispositif d'identification de forme d'onde 18 comporte en outre un module de calcul de statistiques 28, le module 28 étant configuré pour calculer un vecteur de statistiques par vecteur intermédiaire, chaque vecteur de statistiques comprenant des valeurs de paramètres statistiques prédéterminés calculées pour le vecteur intermédiaire.

De plus, le dispositif d'identification de forme d'onde 18 comporte un module 30 de formation d'un vecteur de description du vecteur initial et un module 32 d'application d'un modèle de classification prenant en entrée le vecteur de description, le modèle de classification étant préalablement entraîné par apprentissage machine pour fournir une prédiction d'appartenance à une classe de forme d'onde parmi un ensemble de N classes de formes d'onde prédéterminé. Chaque classe de forme d'onde est associée à des informations 34 de caractérisation de la forme d'onde, ces informations 34 étant mémorisées, par exemple dans l'unité de mémoire électronique 22.

Dans un mode de réalisation, les modules 26, 28, 30, 32 sont réalisés sous forme d'instructions logicielles formant un programme d'ordinateur, qui, lorsqu'il est exécuté par un dispositif électronique programmable, met en œuvre un procédé d'identification de forme d'onde, tel que décrit plus en détail ci-après.

En variante non représentée, les modules 26, 28, 30, 32 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

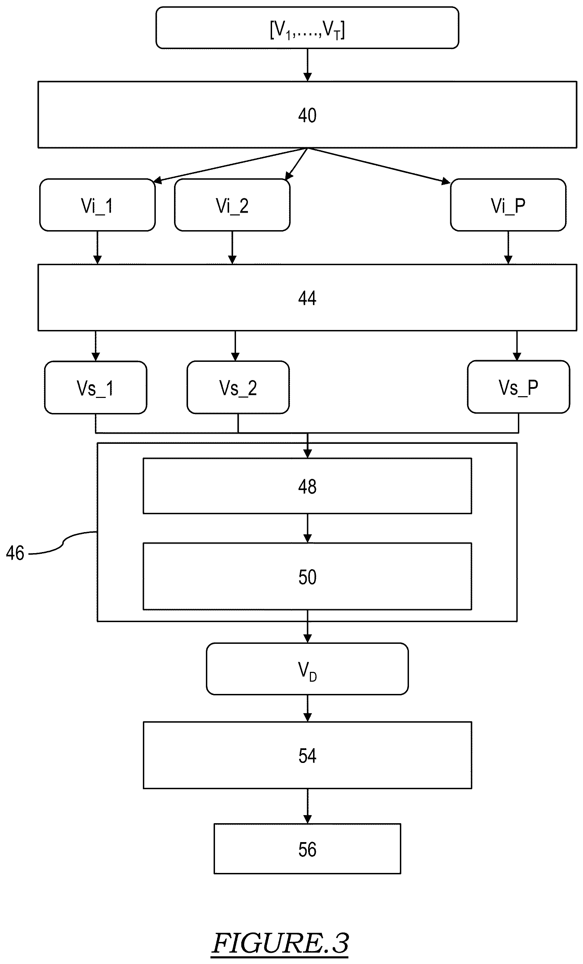

Un mode de réalisation d'un procédé d'identification de forme d'onde est décrit ci-après en référence à la figure 3.

Un vecteur initial V=[V₁...V_{T}], de T échantillons est fourni en entrée, les valeurs V₁ à V_{T} étant des valeurs numériques.

Le procédé comporte une étape 40, mise en œuvre par le module 36, d'application d'un réseau de diffusion par ondelettes au vecteur initial, et obtention en sortie d'un nombre P de vecteurs intermédiaires, P étant un nombre entier, par exemple compris entre 35 et 2500.

Les réseaux de diffusion par ondelettes, ou « wavelet scattering networks » en anglais, sont connus dans le domaine de l'analyse des signaux 1D et 2D, par exemple de la publication M. Mesarcik, S. Lewis, A. Mishra, J. Pidanic and K. Juryca, « Discrete Wavelet Design for Target Classification in Pulse-Doppler Surveillance», 2019 29th International Conference Radioelektronika (RADIOELEKTRONIKA), Pardubice, Czech Republic, 2019, pp. 1-6 .

Un tel réseau met en œuvre une transformation d'un signal numérisé d'entrée, représenté sous forme d'un vecteur d'entrée, par une succession de transformations en ondelettes. Structurellement la transformation s'apparente à une architecture de réseau de neurones de type convolutif (ou CNN, pour « Convolutive Neural Network ») dans lequel les noyaux de convolution sont des filtres ondelettes, le nombre de niveaux successifs s'apparentant à un nombre de couches du réseau CNN. De manière connue, une transformation en ondelettes applique, sur un signal numérisé, un filtrage passe-bas et un filtrage passe-haut à chaque niveau, chaque filtrage effectuant une réduction (ou décimation) du nombre d'échantillons. La transformation en ondelettes est appliquée sur plusieurs niveaux.

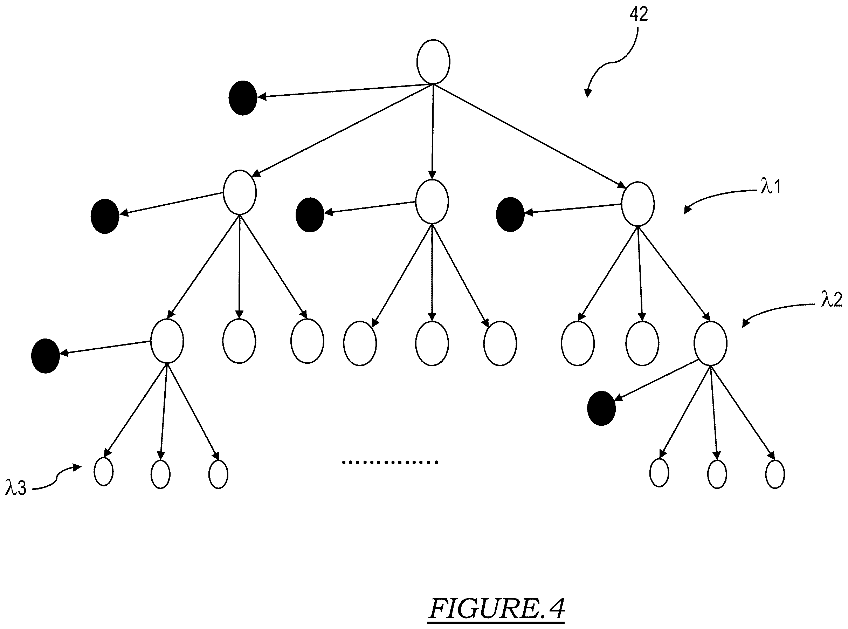

La figure 4 illustre schématiquement une architecture de réseau de diffusion par ondelettes 42, qui comporte 3 niveaux ou couches. Les vecteurs traités sont illustrés schématiquement par des points blancs, et les vecteurs de sortie par des points noirs.

Le réseau de diffusion par ondelettes 42 applique à chaque niveau une moyenne glissante φ sur 2^{J} échantillons, J étant un entier choisi, sur le module d'un filtrage en ondelettes *ψ_{λq}* appliqué au signal issu du niveau précédent *λ*_{*q*-1}.

Par exemple un vecteur de sortie au niveau 1 est calculé par $Vi \left(t, {λ}_{1}\right) = \left|V\left(t\right)∗{ψ}_{λ 1}\right| ∗ φ$

Où V(t) est le vecteur initial, et |a| représente le module de a, et le symbole * représente l'opération de convolution.

Le réseau de diffusion par ondelettes 42 est caractérisé par les paramètres suivants : J, où 2^{J} est le nombre d'échantillons sur lequel est appliquée la moyenne glissante φ ; Q le nombre d'ondelettes distinctes appliquées par octave de fréquence, et le nombre de niveaux (ou couches) du réseau.

Les ondelettes distinctes appliquées sont des ondelettes de toute famille d'ondelettes connues, par exemple les ondelettes de Morlet.

Le paramètre Q est par exemple déterminé en fonction d'un type de phénomènes à analyser : une plus grande valeur de Q est propice pour l'analyse de phénomènes longs, une plus petite valeur de Q est propice pour l'analyse de phénomènes transitoires. Par exemple, Q est compris entre 1 et 20.

Avantageusement, la transformation appliquée par ce type de réseau de diffusion par ondelettes est quasi invariante par translation, l'invariance par translation dépendant du paramètre J : plus J est grand, plus l'invariance par translation est importante. Par exemple, J est compris entre 5 et 20.

Le paramètre Q peut varier d'une couche à l'autre, par exemple, dans un mode de réalisation, Q est plus grand dans la première couche que dans la seconde couche et ainsi de suite.

A l'issue de l'étape 40 sont obtenus P vecteurs appelés vecteurs intermédiaires, Vi_1 à Vi_P, chacun des vecteurs intermédiaires étant de taille T/2^{J}.

Le nombre P est dépendant des paramètres J et Q du réseau de diffusion par ondelettes : $P ∝ JQ + \frac{J \left(J-1\right) Q}{2}$

Le procédé comporte alors une étape 44 de calcul de statistiques, mise en œuvre par le module 28 de calcul de statistiques. A l'étape 44, pour chaque vecteur intermédiaire Vi_k, des valeurs de paramètres statistiques choisis sont calculées, ces paramètres étant les composants d'un vecteur de statistiques Vs_k correspondant.

Chaque vecteur de statistique a une taille S, S étant égal au nombre de paramètres statistiques utilisé.

Les paramètres statistiques choisis comprennent par exemple : le minimum, le maximum, la moyenne, l'écart-type.

En variante optionnelle, les paramètres statistiques utilisés comprennent en plus les quartiles, les déciles, des moments d'ordre supérieur.

Les paramètres statistiques choisis permettent de décrire des caractéristiques des vecteurs intermédiaires, et donc de caractériser le vecteur initial.

A l'issue de l'étape de calcul de statistiques 44 sont obtenus P vecteurs de statistiques associés.

Le procédé comporte alors une étape de formation 46 d'un vecteur de description V_{D} du vecteur initial, à partir des vecteurs de statistiques.

La formation 46 comporte une concaténation 48 des vecteurs de statistiques, pour obtenir un vecteur de taille PxS, qui est appelé ci-après vecteur concaténé.

Optionnellement, la formation 46 comporte, après la concaténation 48, une étape 50 de réduction de la taille du vecteur concaténé pour obtenir le vecteur de description V_{D}.

Dans un mode de réalisation, la réduction de la taille du vecteur concaténé est effectuée par une analyse discriminante linéaire, ou LDA (pour « Linear Discriminant Analysis » en anglais). L'analyse discriminante linéaire est une technique connue de réduction d'espace de représentation.

L'analyse discriminante linéaire est de préférence entraînée préalablement pour projeter un vecteur d'entrée sur un espace de taille N-1, N étant le nombre de classes de formes d'onde de l'ensemble de formes d'onde considéré. En d'autres termes, pour un vecteur d'entrée (vecteur concaténé) de taille PxS dans le cas d'espèce, un vecteur de sortie de taille N-1 est obtenu par application de l'analyse discriminante linéaire.

L'analyse discriminante linéaire est entraînée pour que la distance entre deux vecteurs de sortie correspondant à des vecteurs d'entrée appartenant à des classes différentes soit maximisée, et que la distance entre deux vecteurs de sortie correspondant à des vecteurs d'entrée appartenant à la même classe soit minimisée.

Le vecteur de sortie de taille N-1 forme le vecteur de description V_{D}.

Avantageusement, l'analyse discriminante linéaire permet de supprimer des informations redondantes contenues dans les vecteurs concaténés par rapport aux formes d'onde à identifier, et donc d'obtenir un vecteur de description à partir d'un vecteur de description qui est représentatif mais de taille fortement réduite.

En variante, il est envisageable de réaliser la réduction de la taille du vecteur concaténé par une analyse en composantes principales ou PCA (pour « Principal Component Analysis ») ou par application d'un réseau de neurones auto-encodeur.

Lorsque l'étape de réduction 50 n'est pas mise en œuvre, le vecteur de description V_{D} est le vecteur concaténé obtenu à l'issue de l'étape 48.

Le procédé comprend ensuite une étape 54 de classification du vecteur de description V_{D}, par application d'un modèle de classification préalablement entraîné par apprentissage machine, sur des données d'entraînement, pour fournir une prédiction d'appartenance à une classe de forme d'onde parmi l'ensemble de N classes de formes d'onde.

Dans un mode de réalisation, le modèle de classification est un modèle à base d'arbres de décision, par exemple en appliquant une méthode à gradient renforcé connue, également connue sous le nom de «gradient boosting » ou XGBoost. Avantageusement, l'entraînement des arbres de décision par une méthode à gradient renforcé est allégé, d'un point de vue calculatoire, par rapport à un entraînement d'un réseau de neurones profond.

En variant, le modèle de classification appliqué à l'étape de classification 54 est un réseau de neurones.

Selon une autre variante, la classification 54 est effectuée par un modèle de classification à base de noyaux, par exemple une machine à vecteurs de support ou SVM (pour « Support Vector Machine »)

Ainsi, pour un vecteur initial T, une prédiction de classe de forme d'onde est obtenue.

De préférence, les données d'entraînement utilisées pour l'entraînement du modèle de classification comprennent des données représentatives de divers décalages par translation, de sorte à mieux classifier des formes d'ondes à partir d'enregistrements partiels ou décalés temporellement par rapport à l'instant de début de période de répétitions des motifs.

Chaque classe de forme d'onde est associée à une famille d'émetteurs d'onde électromagnétiques.

Dans un mode de réalisation, chaque classe de formes d'onde est associée à des informations de caractérisation.

Le procédé comporte ensuite une étape 56 d'identification et exploitation de la classe de forme d'onde prédite. Plusieurs modes de réalisation sont envisageables.

Par exemple, lors de l'étape 56, la classe de forme d'onde et optionnellement des informations relatives à la classe de forme d'onde prédite sont extraites et affichées sur une interface graphique à destination d'un opérateur. Les informations relatives à la classe de forme d'onde prédite sont par exemple extraites d'une base de données préalablement enregistrée.

En variante, la classe de forme d'onde prédite, et optionnellement les informations relatives à la classe de forme d'onde prédite, sont transmises à un système informatique externe pour exploitation.

Avantageusement, le procédé proposé permet d'extraire des caractéristiques distinctives, invariantes ou quasi invariantes en translation, à partir d'un signal numérisé brut, obtenu dans le récepteur d'ondes électromagnétiques, tout en réalisant une compression suffisante pour une utilisation efficace des ressources calculatoires.

Avantageusement, dans le procédé proposé, la quantité d'entraînement à effectuer est limitée, puisque l'entraînement par apprentissage machine intervient pour la mise au point du modèle de classification, et dans l'étape optionnelle de réduction de la taille du vecteur concaténé. Alors, la quantité nécessaire d'entraînement pour ajouter de nouvelles formes d'ondes est limitée.

Avantageusement, un fort taux de compression est obtenu, permettant de traiter des signaux numérisés sous forme de vecteurs initiaux de tailles de l'ordre de 10 000 000, correspondant un signal de 10ms échantillonné à 1GHz. Le procédé proposé permet de passer d'un vecteur de taille 10 000 000 à un vecteur de taille comprise entre 42 et 1364. Cette valeur varie en fonction de J, de Q, du nombre de statistiques choisis ainsi que de l'application ou non d'un traitement de réduction de taille du vecteur de description.

Ainsi, selon le choix des valeurs de J et de Q paramétrant le réseau de diffusion par ondelettes, des taux de compression de 1300 à 42000 ont été obtenus, tout en préservant une bonne capacité d'identification des formes d'onde.

## Revendications

1. Procédé d'identification de forme d'onde à partir d'un signal numérisé, ledit signal numérisé étant obtenu par réception d'ondes électromagnétiques par une antenne de réception, numérisation et désentrelacement, le signal numérisé étant représenté sous forme d'un vecteur initial de T échantillons représentatifs des ondes électromagnétiques reçues, le procédé étant mis en œuvre par un processeur de calcul et étant **caractérisé en ce qu'**il comporte des étapes de:
- application (40) d'un réseau de diffusion par ondelettes au vecteur initial, et obtention en sortie d'un nombre P de vecteurs intermédiaires (Vi_1,...,Vi_P),
- calcul (44) d'un vecteur de statistiques (Vs_1,...,Vs_P) par vecteur intermédiaire (Vi_1,...,Vi_P), chaque vecteur de statistiques comprenant des valeurs de paramètres statistiques prédéterminés calculées pour ledit vecteur intermédiaire,
- formation (46) d'un vecteur de description (V_{D}) du vecteur initial à partir desdits vecteurs de statistiques,
- application (46) d'un modèle de classification prenant en entrée le vecteur de description, le modèle de classification étant préalablement entraîné par apprentissage machine, pour fournir une prédiction d'appartenance à une classe de forme d'onde parmi un ensemble de N classes de formes d'onde prédéterminé.

2. Procédé selon la revendication 1, dans lequel l'étape de formation (46) comporte une concaténation (48) desdits vecteurs de statistiques, ledit vecteur de description résultant de ladite concaténation.

3. Procédé selon la revendication 1, dans lequel l'étape de formation (46) comporte une concaténation desdits vecteurs de statistiques pour obtenir un vecteur concaténé, ladite concaténation étant suivie d'une étape de réduction (48) de taille du vecteur concaténé pour obtenir ledit vecteur de description.

4. Procédé selon la revendication 3, dans lequel la réduction de taille (50) met en œuvre une analyse discriminante linéaire, préalablement entraînée pour une discrimination entre les N classes de formes d'onde dudit ensemble de formes d'onde, le vecteur de description obtenu en sortie étant de taille N-1.

5. Procédé selon l'une quelconque des revendications 1 à 4, dans lequel le modèle de classification est un modèle de classification à arbres de décision, préalablement entraîné par apprentissage supervisé.

6. Procédé selon l'une quelconque des revendications 1 à 5, comportant en outre une étape d'identification de la forme d'onde en fonction de la classe prédite, comportant une extraction d'informations associées à la classe de forme d'onde prédite à partir d'une base de données, et un affichage de la classe de forme d'onde prédite et desdites informations associées sur une interface graphique ou une transmission desdites informations à un système informatique externe.

7. Procédé selon l'une quelconque des revendications 1 à 6, dans lequel les paramètres statistiques calculés comprennent, pour chaque vecteur intermédiaire, un ou plusieurs des paramètres suivants : le minimum, le maximum, la moyenne, l'écart-type.

8. Programme d'ordinateur comportant des instructions de code qui, lorsqu'elles sont exécutées par un dispositif électronique programmable, mettent en œuvre un procédé d'identification de forme d'onde à partir d'un signal numérisé, conforme aux revendications 1 à 7.

9. Dispositif d'identification de forme d'onde à partir d'un signal numérisé, ledit signal numérisé étant obtenu après réception d'ondes électromagnétiques par une antenne de réception, numérisation et désentrelacement, le signal numérisé étant représenté sous forme d'un vecteur initial de T échantillons représentatifs d'ondes électromagnétiques reçues, le dispositif comportant un processeur de calcul et étant caractérisé ce qu'il est configuré pour mettre en œuvre :
- un module (26) d'application d'un réseau de diffusion par ondelettes au vecteur initial, et d'obtention en sortie d'un nombre P de vecteurs intermédiaires,
- un module (28) de calcul d'un vecteur de statistiques par vecteur intermédiaire, chaque vecteur de statistiques comprenant des valeurs de paramètres statistiques prédéterminés calculées pour ledit vecteur intermédiaire,
- un module (30) de formation d'un vecteur de description du vecteur initial à partir desdits vecteurs de statistiques,
- un module (32) de classification par application d'un modèle de classification prenant en entrée le vecteur de description, le modèle de classification étant préalablement entraîné par apprentissage machine, pour fournir une prédiction d'appartenance à une classe de forme d'onde parmi un ensemble de N classes de formes d'onde prédéterminé.

10. Récepteur d'ondes électromagnétiques, comportant une antenne (12) de réception d'ondes électromagnétiques, un module de réception (14) configuré pour numériser lesdites ondes électromagnétiques reçues, un module de désentrelacement (16) et un dispositif d'identification de forme d'onde (18) à partir d'un signal numérisé selon la revendication 9.
